# EUROPEAN PATENT SPECIFICATION

(11) **EP 0 780 047 B1**
(45) Date of publication and mention of the grant of the patent: **11.12.2002**
(21) Application number: 95930040.1
(22) Date of filing: 04.09.1995
(51) Int. Cl.: A01B 33/12, A01B 33/10, A01B 33/02

(54) **ROTARY CULTIVATOR AND CULTIVATING METHOD**
KREISELKULTIVATOR UND KULTIVATIONSVERFAHREN
CULTIVATEUR ROTATIF ET PROCEDE DE TRAVAIL DU SOL AU CULTIVATEUR

(30) Priority: 09.09.1994 JP 21629794; 12.09.1994 JP 21771594; 16.09.1994 JP 22148694; 28.10.1994 JP 28921194
(43) Date of publication of application: 25.06.1997
(73) Proprietor: YANMAR AGRICULTURAL EQUIPMENT CO., LTD., Osaka-fu 530-0013 (JP); YANMAR DIESEL ENGINE CO. LTD., Osaka 530 (JP); ISHIKAWAJIMA SHIBAURA MACHINERY CO., LTD., Tokyo 151 (JP)
(72) Inventor: SUDOU, Takaaki Yanmar Agricult. Equipm. Co., Ltd., Osaka-shi, Osaka 530 (JP); NAKAGAWA, Osamu Yanmar Agricult. Equipment Co.,Ltd, Osaka-shi, Osaka 530 (JP); TAKAHASHI, Toukou Yanmar Diesel Engine Co., Ltd., Osaka-shi, Osaka 530 (JP); HIRANO, Takashi Yanmar Diesel Engine Co., Ltd., Osaka-shi, Osaka 530 (JP); YAMAMOTO, Masaru, Ishikawajima-ShibauraMach.Co.Ltd, Matsumoto-shi, Nagano 390 (JP); TAKIZAWA, Tetsuya, Ishikawajima-Shibaura Ma.Co.Ltd, Matsumoto-shi, Nagano 390 (JP); MIYAZAKI, Mitsutoshi, Ishikawajima-Shibaura Mach., Matsumoto-shi, Nagano 390 (JP)
(74) Representative: Henkel, Feiler, Hänzel
(86) International application number: JP9501758
(87) International publication number: WO96007306

(56) References cited:
- EP-A- 0 222 505
- AU-B- 445 441
- CH-A- 250 277
- CH-A- 291 122
- DE-B- 1 053 226
- FR-A- 2 233 919
- JP-U- 62 064 202
- JP-U- 62 202 105
- JP-U- 63 033 703
- US-A- 4 191 259
- US-A- 4 365 673
- TOSHIO MURATA, "Work Machines for Agricultural Tractors", REVISED and ENLARGED Edit., (TOKYO) HAKUYUSHA K.K., (1975), pages 227-230.

## Description

### FIELD OF THE INVENTION

The present invention relates to a high speed rotary cultivator as defined in the preamble portion of claim 1.

### BACKGROUND OF THE INVENTION

Conventionally, the rotary cultivator is attached to the rear of a tractor or a power cultivator to thereby perform the cultivating work. The cultivating work, however, is monotonous and when a wide farm is cultivated or the cultivating work is contracted, it has been largely desired to finish the work as early as possible.

Therefore, when the running speed is changed to high, the working speed increases, but inconveniently, the cultivating pitch is larger so that it is impossible that an uniform cultivating work is performed.

In order to eliminate the above inconvenience, a PTO transmission changes the speed in proportion to the accelerated running speed, thereby enabling the rotation speed of the rotary cultivator to increase.

However, when the number of rotations of the rotary cultivator is increased corresponding to such the running speed, it is disadvantageous that a required power increases to that extent.

A prior art rotary cultivator with the features of the preamble portion of claim 1 is known from US 4 191 259 A.

Another prior art rotary cultivator is described in US 4 365 673 A. Cutting plates are arranged in a number of parallel planes along a horizontal shaft. The two cutting plates or claws at each plane are directed in different axial directions. The cutting plates of adjacent planes are arranged with a radial phase difference of 90°.

### SUMMARY OF THE INVENTION

It is the object of the invention to provide a rotary cultivator which provides the advantage that untouched longitudinal gaps on a field between adjacent cultivating claws along the traveling direction of a vehicle pulling the cultivator are reduced even at high vehicle traveling speed without further increasing the rotary speed of the cultivator.

According to the present invention there is provided a rotary cultivator as defined in claim 1. Preferred embodiments are defined in the dependent claims.

The present invention is so designed that the rotary cultivator is provided with a plurality of cultivating claws for cutting off and cultivating the farm land on one cultivating line at lines to be cut and cultivated by the cultivating claws, and a plurality sets of mounting bases of the plurality of cultivating claws are disposed leftward and rightward respectively on a same plane with the plane perpendicular to an axis of a cultivating claw shaft. Further the respective cultivating claws in a row on the same plane are curved alternately leftwardly and rightwardly. Even in the case that the running speed of power cultivator becomes high so that loci of moving cultivating claws are not overlapped in the normal number of rotations to thereby leave a not-cultivated area or residual virgin soil, the number of cultivating claws acting on the same cultivating line per one rotation is made plural so as to overlap the loci of claws and restrict to a minimum the residual virgin soil by a smaller desired power, thereby expecting to shorten working hours and lower a manufacturing cost.

The cultivating claw is sideward bent to form an elastic claw, a predetermined gap is formed between the loci of the utmost ends of adjacent cultivating claws, and two cultivating claws are provided at an interval of 180° therebetween and on the cultivating claw shaft. The gap between the left and right cultivating claws is widened to perform the work in minimizing the residual virgin soil while cultivating the soil in the state where residual virgin soil remains. Hence, the minimum required number of cultivating claw diminishes the predetermined power and enables the cultivating work to be performed at high speed.

At a portion where the residual virgin soil remains due to enlargement of the gap between the tips of the cultivating claws, a cutting blade is provided so that clods between the tips of cultivating claws are crushed to improve the crushing efficiency, and also no residual virgin soil remains at a portion not directly cultivated by the cultivating claws.

Furthermore, an angle between the locus of the cultivating claw when the cultivating claw escapes from underground and the horizontal line at the ground surface is secured to exceed a predetermined angle, so that the resilient force of the cultivating claw when getting out from underground promotes raising of the soil and the crushing force of soil increases to minimize creation of residual virgin soil, thereby expecting the cultivating work to be improved.

The above and further objects and novel features of the invention will more fully appear from the following detailed description when the same is read in connection with the accompanying drawings.

### BRIEF DESCRIPTION OF THE DRAWINGS

Fig. 1 is an entire side view of a rotary cultivator of the invention attached to the rear of a tractor,
Fig. 2 is a side view explanatory of the rotary cultivator of the invention,
Fig. 3 is a plan view explanatory of the same,
Fig. 4 is a rear view explanatory of cultivating claws and cutting blades of the same,
Fig. 5 shows continuous arrangement of a cultivating claw shaft, cultivating claws and cutting blades,
Fig. 6 is a side view of the rotary cultivator provided with total six cultivating claws of two left and right sets of each three claws in a row,
Fig. 7 is a developed view showing the portion of driving into the soil the cultivating claws of the rotary cultivator provided with total six claws of two left and right sets of each three claws in Fig. 6,
Fig. 8 is a side view of cultivating claws of the rotary cultivator provided with total four claws of two left and right sets of each two claws in a row,
Fig. 9 is a rear view explanatory of a gap formed between the adjacent cultivating claws,
Fig. 10 is a side view explanatory of the cultivating claw,
Fig. 11 is a plan view explanatory of the cultivating claw,
Fig. 12 is a view explanatory of loci of movement of the cultivating claws of the present invention,
Fig. 13 is a concrete illustration of the loci of the movement of the cultivating claws of the present invention,
Fig. 14 is an illustration of locus of movement of the conventional cultivating claw, and
Fig. 15 is a concrete illustration of locus of movement of the conventional cultivating claw.

### THE PREFERRED EMBODIMENT OF THE INVENTION

Next, explanation in detail will be given on the embodiment of the present invention in accordance with the drawings.

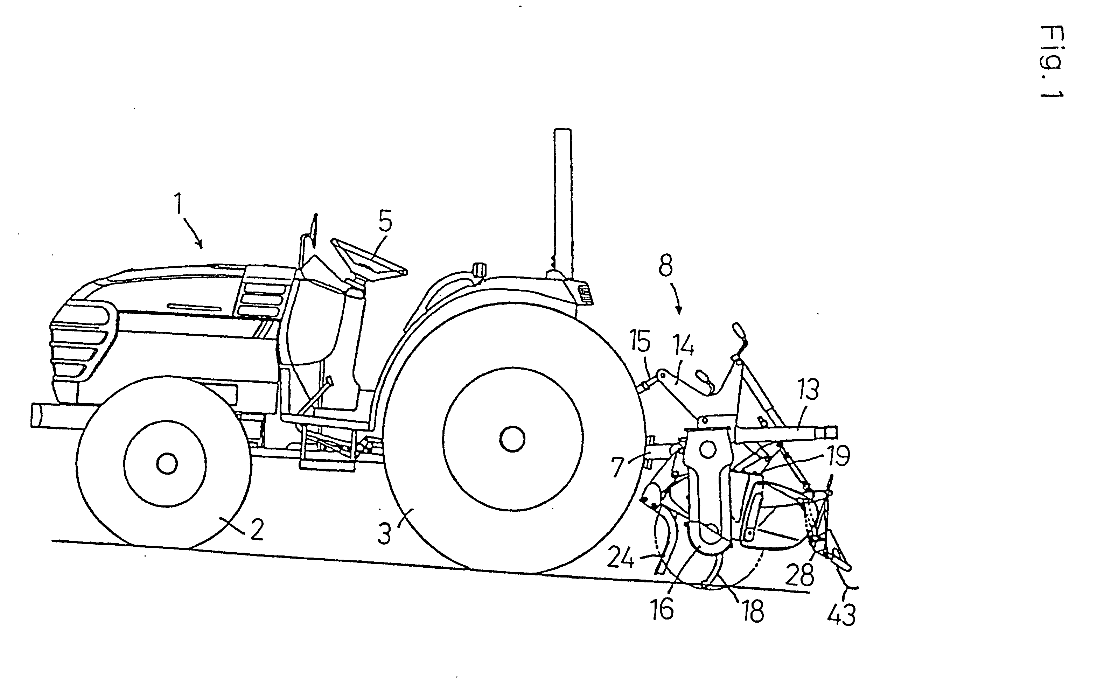

In Figs. 1 to 4, a tractor 1 has front wheels 2 and rear wheels 3, the front wheels 2 being steered by a steering handle 5 in the front of a driver's seat 4. To the tractor 1 is mounted through a lower link 7 a rotary cultivator 8 of side drive type. At the center thereof is disposed a gear box 9, and a driving shaft 10a with universal joint projects forwardly from an input shaft 9a at the gear box 9 and connects with a power take-off shaft 10 of the tractor 1 to thereby transmit the power. Beams 11 laterally project from both sides of gear box 9, a support plate 12 is fixed at an intermediate portion of each beam 11, from the front end of the support plate 12 projects a pin for pivotally supporting the lower link 7, the support plate 12 pivotally supports at the rear end thereof the front end of a depth frame 13, and at the front end of a mast 14 is constituted a pivotal connection for a top link 15.

On the outer end of the beam 11 is fixed a chain casing 16 at the upper portion thereof, a cultivating claw shaft 17 is vertically mounted to the lower portion of the chain casing 16, and on the cultivating claw shaft 17 are radially mounted a large number of cultivating claws 18 comprising hatched type claws.

A rotary cover 19 covers above the rotary locus of the cultivating claw 18 and a side cover 20 covers both sides of the same.

The cultivating claw shaft 17 is driven by the input shaft 9a in the gear box 9 through bevel gears 9b and 9c therein, a transmitting shaft 11a in the beam 11, sprokets 16a and 16b, and a chain 16c, so as to rotate the cultivating claws 18 for cultivating work.

A plate 21 is fixed in the front of the inner surface of the upper portion of chain casing 16, support rod 22 is horizontally mounted at the front end of the plate 21, a mounting plate 23 is fixed to the support rod 22, and cutting blades 24 are fixed at the upper portion thereof onto the mounting plate 23.

In addition, four cutting blades 24 are mounted widthwise of the cultivator, which are disposed respectively at several cultivating claws 18. Each cutting blade 24 is rearwardly curved at an intermediate portion so that the intermediate portion faces within the front of the locus of rotations of the cultivating claw 18, and the utmost end below the intermediate portion is slanted forwardly of the device.

In brief, the cutting blade 24 overlaps at the intermediate portion thereof with the front of locus of rotations of cultivating claw 18 when viewed from the side, an interval between the cutting blade 24 and the cultivating claw 18 is diminished not to create the residual virgin soil and the underground entering action of cutting blade 24 restrains the rotary cultivator 8 from rising due to cultivating resistance during the cultivating work, where the cultivating claws 18 need not be provided at every interval therebetween with the cutting blade 24, but may adequately expand the interval not to generate cultivating resistance.

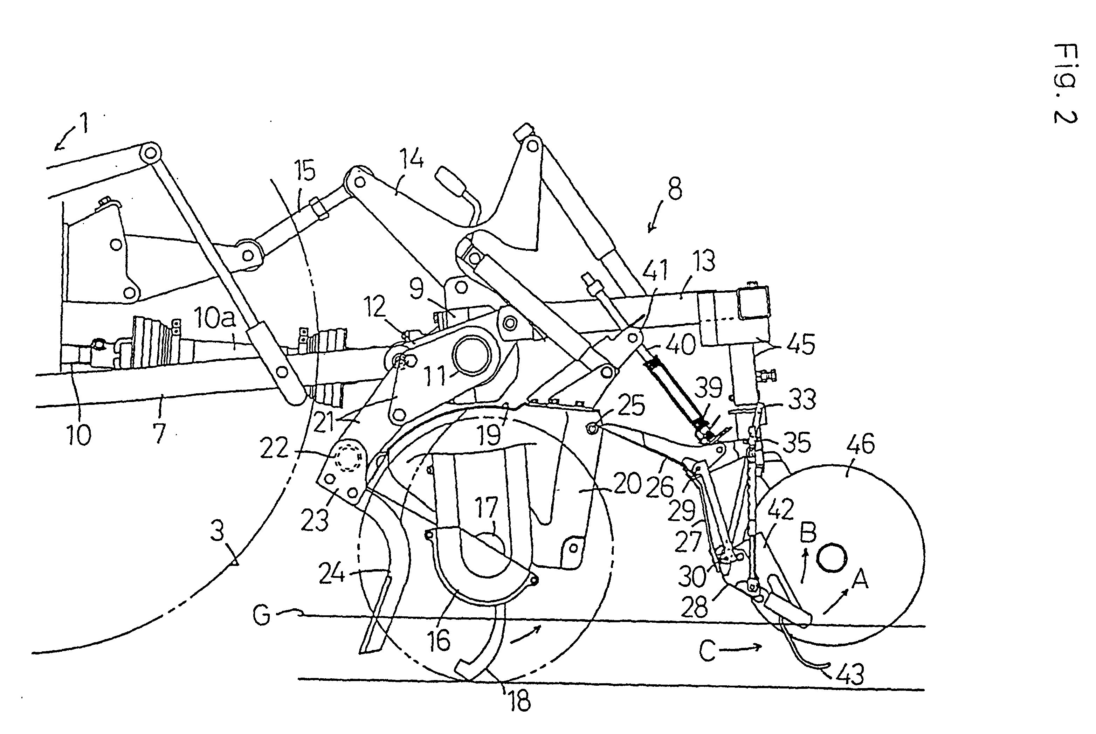

Furthermore, in Fig. 2, to the rear end of a rotary cover 19 above the cultivating claw 18, a first rear cover 26 of steel plate is swingably connected through a first fulcrum shaft 25, and a second rear cover 27 of elastic material, such as synthetic resin or rubber, is fixed at the front end to the rear end of the first rear cover 26.

A third rear cover 28 of steel plate is fixed at the front end thereof to the rear end of the second rear cover 27, and the second fulcrum shaft 29 at the rear end of the first rear cover 26 and the third fulcrum shaft 30 at the front end of the third rear cover 28' are connected with a pair of left and right links 31.

A first suspension rod 33 is pivotally supported at the lower end thereof to a fourth fulcrum shaft 32 substantially coaxial with the third fulcrum shaft 30, a pair of second left and right suspension rods 35 being connected at the lower ends to a fifth fulcrum shaft 34 at the rear end of the third rear cover 28.

The first suspension rod 33 and a second suspension rod 35 are vertically movably mounted at the upper ends thereof to each support member 36 for the first rear cover 26, the suspension rods 33 and 35 and third rear cover 28 forming a triangle when viewed from the side.

Also, a line connecting the second fulcrum shaft 29, third fulcrum shaft 30 and fifth fulcrum shaft 34, forms a triangle when viewed from the side.

The third rear cover 28 is upwardly moved in the directions of the arrows A and B around the second fulcrum shaft 29 or the third fulcrum shaft 30. Thus, the second fulcrum shaft 29, support member 36, and both lever mechanisms of rods 33 and 35, allow the third rear cover 28 to move rearwardly upwardly in the direction of the arrow C which is regulated of its forward movement by the downward bracing action of the rods 33 and 35 respectively.

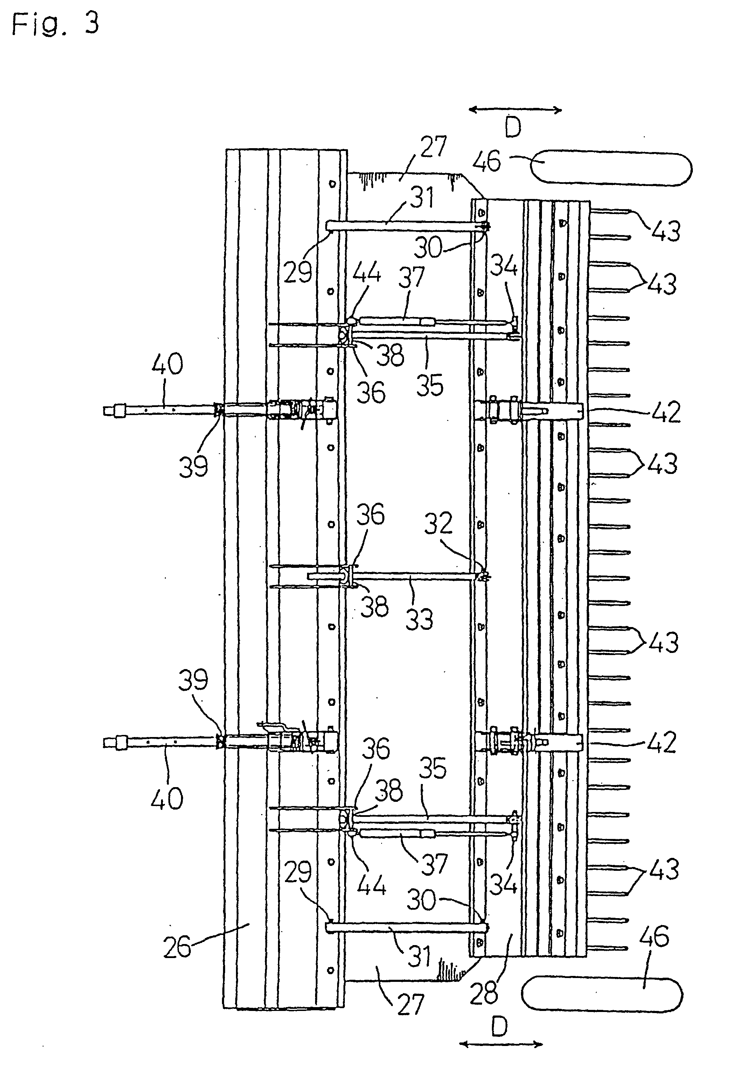

Thus, as shown in Fig. 3, the third rear cover 28 moves in the directions of the arrows A, B and C to allow both sides of the third rear cover 28 to perform a floating action of moving back and forth in the directions of the arrows D when viewed in plan.

A pair of left and right gas dampers 37 are connected between the fifth fulcrum shafts 34 and the support member 26 for the first rear cover 26. The gas dampers 37, which can obtain the spring constant approximately uniform through all strokes and form large strokes, support the third rear cover 28, so that, even when the tractor 1 is laterally slanted, the third rear cover 28 is laterally uniformly pressurized so as to enable the cultivating ground to be level. In addition, instead of the gas damper 37, an oil damper or a multiple coil spring may be used.

The first suspension rod 33 and second suspension rods 35 are freely inserted at the upper ends thereof into bearings 38 at the support members 36 respectively, so that pins of the first suspension rod 33 and second suspension rod 35 abutting against the upper surfaces of bearings 38 prevent the rods 33 and 35 from downwardly escaping and retain the third rear cover 28 from moving in the directions opposite to the directions of the arrows A, B and C.

A pair of left and right rods 40, around which springs 39 are wound, are connected at the lower ends with the upper surface of the first rear cover 26 and slidably mounted at the upper ends to a support member 41 for the rotary cover, 19, so that the first rear cover 26 is adapted to be pressurized by the springs 39.

Onto the upper surface of the third rear cover 28 are detachably fixed rake supports 42, and rakes 43 fixed thereto extend rearwardly of the third rear cover 28.

Furthermore, as shown in Fig. 3, the gas dampers 37 are connected at the upper ends thereof with shafts 44 of the support members 36 which support the upper ends of the second suspension rods 35 respectively, so that the second suspension rods 35 and gas dampers 37 are disposed as close as possible and substantially in parallel to each other. A pair of left and right tail wheels 46 are mounted to the rear end of the depth frame 13 through a support frame 45, the rakes 43 being disposed between the left and right tail wheels 46.

One first suspension rod 33 is disposed at about the center of lateral width of the respective rear covers 26, 27 and 28, the rods 40 are disposed at both the left and right sides of the first suspension rod 33 the two left and right pairs of the second suspension rod 35 and gas damper 37 are disposed further leftwardly and rightwardly outside the left and right rods 40 respectively, and the left and right links 31 are disposed leftwardly and rightwardly outside the second suspension rod 35 and gas damper 37 so as to connect the lateral ends of the first rear cover 26 and second rear cover 27 through the left and right links 31.

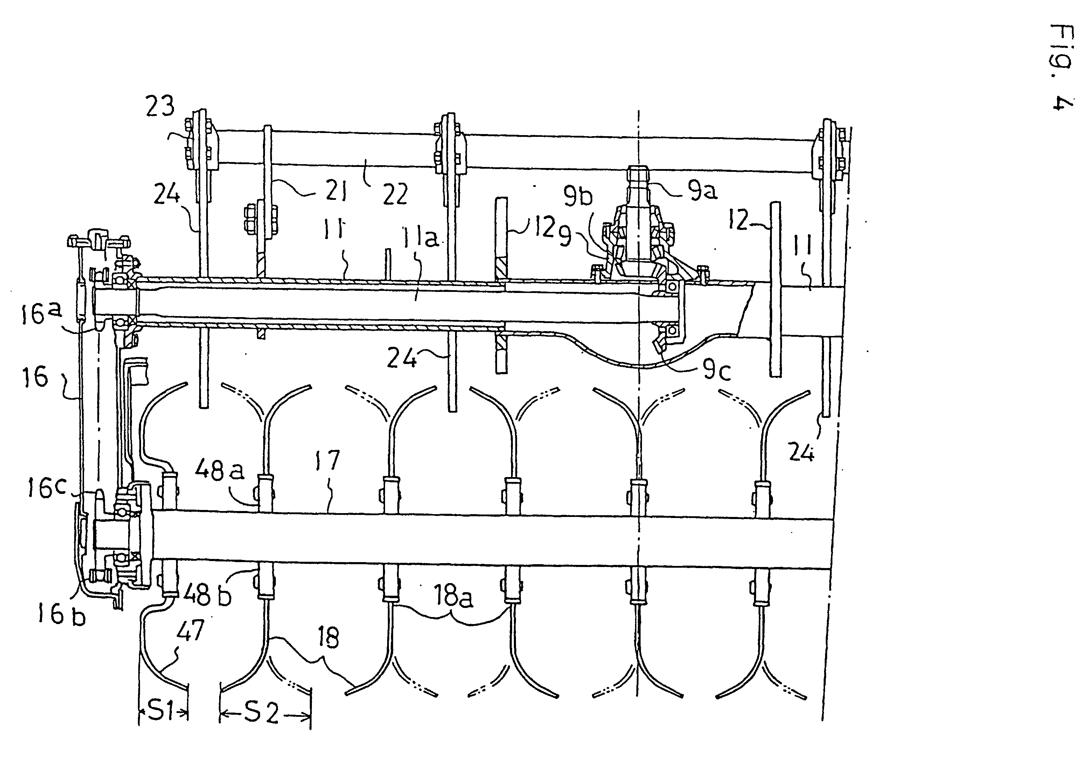

As shown in Fig. 4, a driving force inputted to the input shaft 9a is transmitted to the cultivating claw shaft 17 through the transmitting shaft 11a in the beam 11 and the chain 16c in the chain casing 16 so as to rotate the cultivating claws 18, left and right eccentric claws 47 for expanding a cultivating width are mounted to both axial ends of cultivating claw shaft 17, and a number of cultivating claws 18 are juxtaposed at uniform intervals between the left and right eccentric claws 47.

The cultivating claws 18 are each of holder mounting type and a plurality of them are radially provided in the same plane with respect to the cultivating claw shaft 17, four holders 48a and 48b projecting radially in a row and at each interval of angle of 90° therebetween from the outer periphery of the shaft 17.

The holders 48a and 48b are equipped with hatched-like cultivating tins 18 of halbert-type, the cultivating claws 18 being curved at the utmost ends alternately leftward or rightward with respect to the cultivating claw shaft 17 in order to cut and then turn over the soil. Every two claws 18 opposite to each other at an angle of 180 ° are curved in the same directions of left or right and mounted to four holders 48a and 48b attached to the cultivating claw shaft 17 in the same cross section.

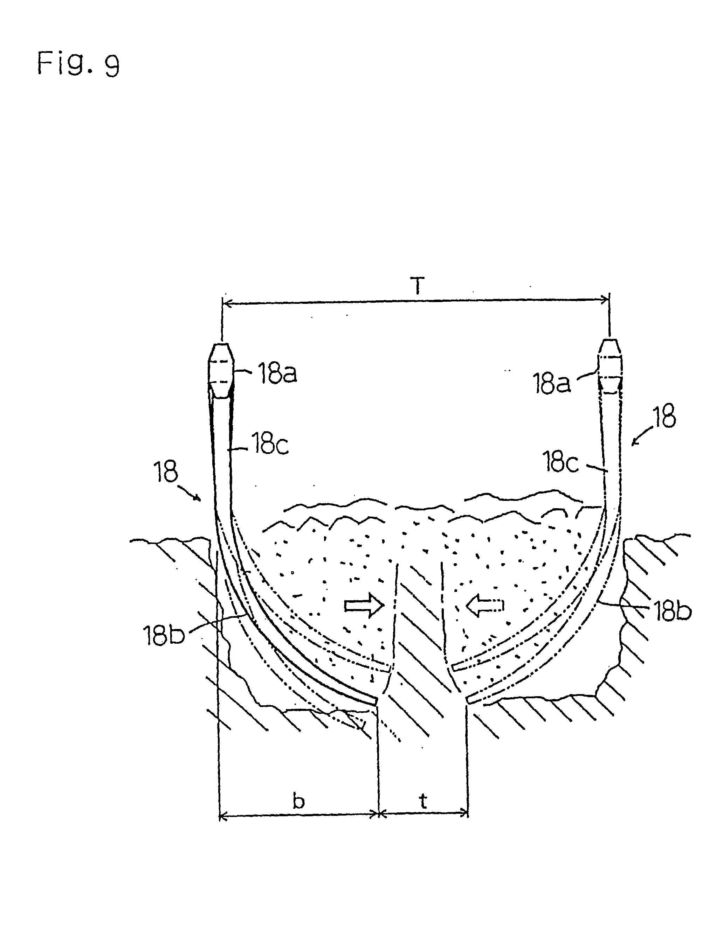

As shown in Fig. 9, the opposite cultivating claws 18 mounted to the holders 48a and 48b are spaced at the roots by a large basic gap T and the loci L of the utmost ends of the same are spaced by a gap t of about 1 ( T:t≒5:1). In this embodiment, when a radius a of rotation is deemed about 245 mm, the basic gap T 200mm and the gap t is about 40mm so that the basic gap T is made larger to reduce the number of mounted cultivating claws 18, whereby a required power is expected to decrease. Hence, when the cultivator is operated in the same power, superfluous power is given to the operating speed so as to enable high speed cultivating work.

As shown in Fig. 4, the cutting blades 24 are fixed at the upper portions thereof to the mounting plate 23 in relation of being adjustable in height. In addition, in this embodiment, four cutting blades 24 are laterally symmetrically disposed along the cultivating claw shaft 17, but the number and positions of cutting blades to be mounted are not defined. However, there is no need of providing the cutting blades 24 between all the cultivating claws 18, and also, of not-symmetrically disposing the cutting blades 24.

The cutting blades 24 are, as illustrated in Fig. 2, linearly formed at the upper portion and rearwardly curved at the lower portion, so that the lower portion of the cutting blade 24 is disposed to overlap with the front of the locus of rotation of the cultivating claw 18 when viewed from the side.

The cutting blades 24, when viewed in front on Fig. 4, are disposed between the predetermined cultivating claws 18 so that, when cultivating claw shaft 17 rotates, the cutting blade 24 does not interfere with the cultivating claw 18.

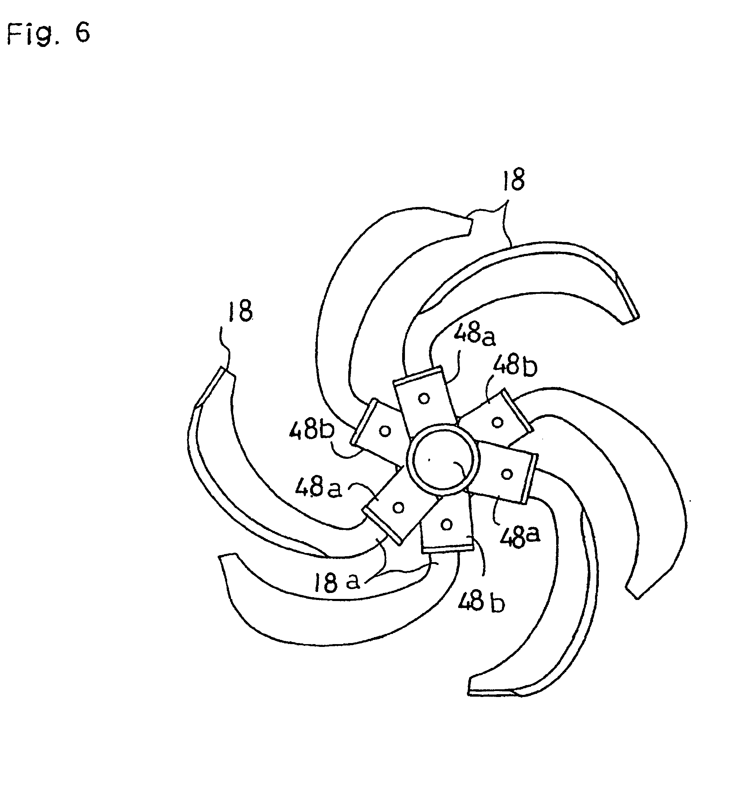

In this embodiment, as shown in Fig. 6, when six cultivating claws 18 are disposed in a row or a plane perpendicular to the cultivating claw shaft 17, as shown in Fig 4, the cutting blades 24 are disposed between the rows of cultivating claws 18 at both axial ends of the shaft 17 and those inside thereof and inside therefrom at an interval of two rows respectively.

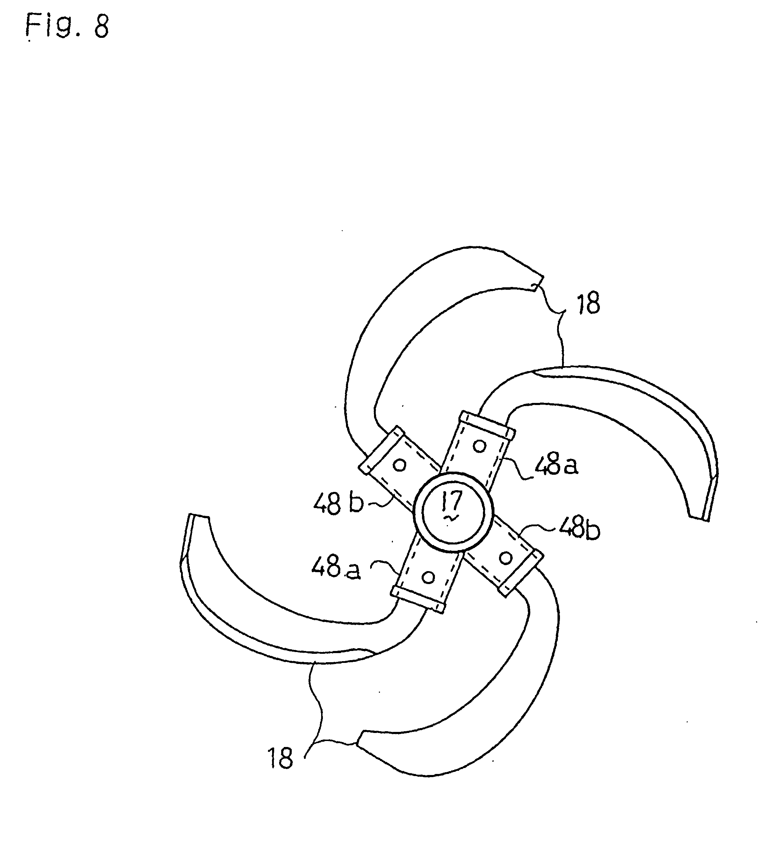

Also, when four cultivating claws 18 are disposed in a row as shown in Fig. 8, the cutting blades 24 are disposed between the rows of cultivating claws 18 at both axial ends of shaft 17 and of those axially inside the cultivating claws 18 at both ends and in a row spaced from the cutting blade 24 at intervals of three rows respectively, such cutting blades 24 may be disposed between the second cultivating claw and the third cultivating claw from both the axial ends, and inside thereof at intervals to two or three rows.

The cutting blades 24, which are provided between the cultivating claws 18, crush clods therebetween during the cultivating work, and when the running speed of the tractor increases, the rotary cultivator 8 is apt to rise, but is prevented from rising by the cutting blades 24.

A plurality of cultivating claws 18, in this embodiment four or six ones, are provided in the same plane perpendicular to the cultivating claw shaft 17, so that, even when the tractor travels at high speed, the rotary cultivator 8 need not increase the rotating speed thereof.

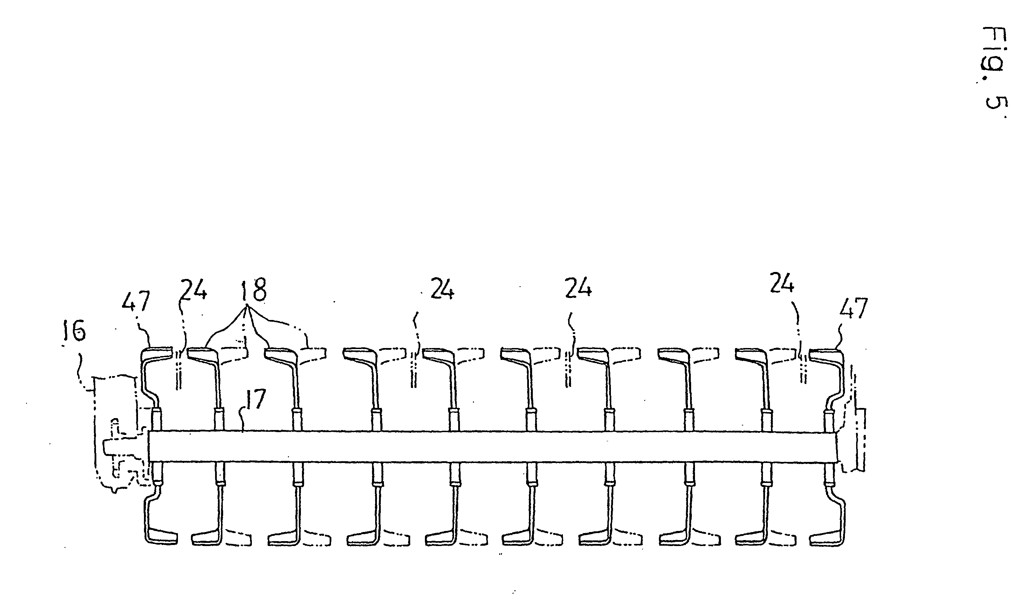

In the case where two sets of three cultivating claws as shown in Fig. 6, total six claws, are laterally disposed, holders 48a and 48b are radially disposed in a row and spaced at 120° each, and as shown in Fig. 5, eccentric blades 47 are mounted at the both ends of cultivator. Between the rows at both axial ends, a plurality of rows of holders 48a and 48b project from the cultivating claw shaft 17 and spaced at uniform intervals, the cultivating claws 18 being mounted to the holders 48a and 48b respectively.

The cultivating claws 18 comprise hatched-like claws and are curved alternately leftwardly or rightwardly at the utmost ends in order to cut and then turn over the soil, and are mounted to the holders 48a and 48b, and the holders 48a and 48b adjacent to each other in the same plane are alternately disposed and at mounting angle spaced at not-uniform intervals. In brief, the adjacent holders 48a and 48b are disposed alternately at a large or small difference of mounting angle.

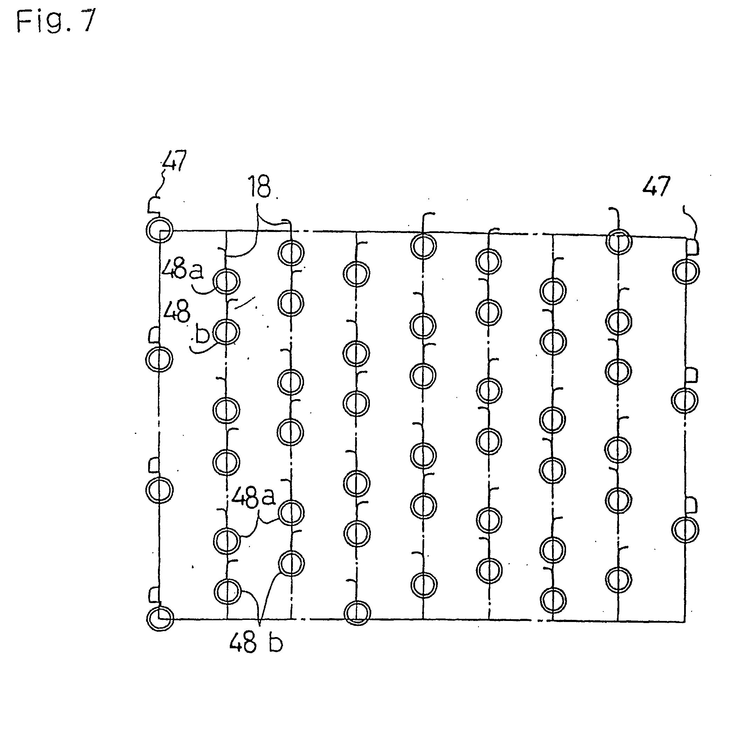

The holders 48a and 48b, as shown in Fig. 7, are different a little in mounting angle at every row so as to form a phase difference and the center line of holder is radially set not to overlap with each other when viewed from the side and it is avoided that the cultivating claws 18 simultaneously enter into the farm ground, thereby expecting dispersion of strength.

As shown in Fig. 9, the gap t between the tips of cultivating claws 18 curved and opposite to each other on the cultivating claw shaft 17 is open larger than the conventional. Widths S1 of cultivating action of the cultivating claw rows at both ends and those S2 of inside cultivating claws, are totaled into 70 through 90%, preferably 80%, of the width of cultivating action of rotary cultivator 8. The not-cultivated portions between the rows of cultivating claws are not directly cut by the claws 18, but the strength of turning over the soil effects the portion, whereby no virgin soil remains and the clods are cut for cultivating by the cutting blades 24 properly disposed.

Next, explanation will be given on the mounting construction of cultivating claw 18. When the cultivating claws 18 of the rotary cultivator 8 are mounted onto the cultivating claw shaft 17, there are a flange type in which a plurality of rows of disc-like flanges are fixed on the cultivating claw shaft 17 and one or a plurality of cultivating claws 18 are radially fixed to the flange and a holder type in which, in the same plane perpendicular to the cultivating claw shaft 17, U-like shape or square-pipe shape holders are radially disposed when viewed from the side and every one is different in phase. Generally, one or two cultivating claws are attached to both the axial ends of cultivating claw shaft 17.

In this embodiment, the aforesaid holder type is used, in which a plurality (four or six) of cultivating claws 18 are provided in the same plane perpendicular to the cultivating claw shaft 17, so that the rotary cultivator 8 is provided which need not increase the rotating speed even when the tractor travels at high speed.

At first, explanation will be given on the case where six cultivating claws 18 are provided in a row and in the same plane perpendicular to the cultivating claw shaft 17 as shown in Fig. 6. Around the cultivating claw shaft 17, the holders 48a and 48b radially project of both ends as shown in Figs. 4 and 5 and disposed in a row spaced at 120° each and the claw seat insertions 18a for the cultivating claws are positioned in about the same plane, and the adjacent holders 48a and 48b are alternately provided and at not-uniform mounting angles. In brief, mounting angular differences for the adjacent holders 48a and 48b are alternately larger or smaller.

Next, explanation will be given on an embodiment in which four cultivating claws 18 are mounted onto the cultivating claw shaft 17, as shown in Fig. 8. In the embodiment, the cultivating claws 18 are mounted onto both ends of the cultivating claw shaft 17 as the same as the above mentioned, and those axially inside of the shaft 17 are mounted onto the holder 48a and 48b which project substantially in the same plane perpendicular to the cultivating claw shaft 17, the holders 48a and 48b are shifted in phase at 180° , and a phase difference between the holders 48a and 48b is a value other than 90°, so that the holders 48a and 48b are spaced at not-uniform intervals and the phase difference between the holders 48a and 48b in the adjacent rows are made different and the cultivating claws 18 are adapted not to simultaneously cut the farm.

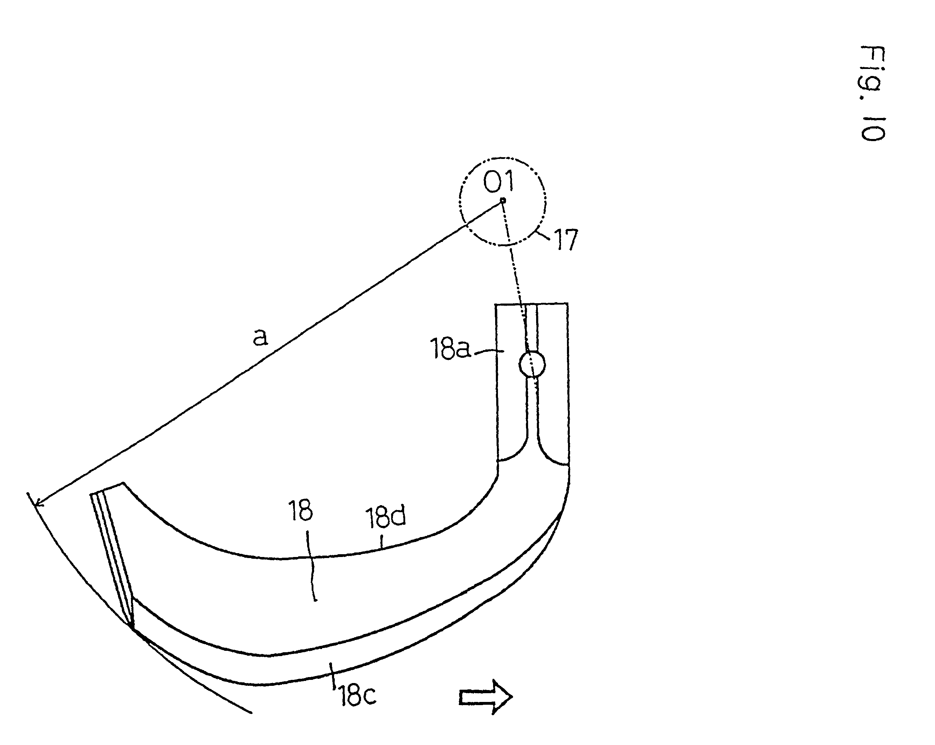

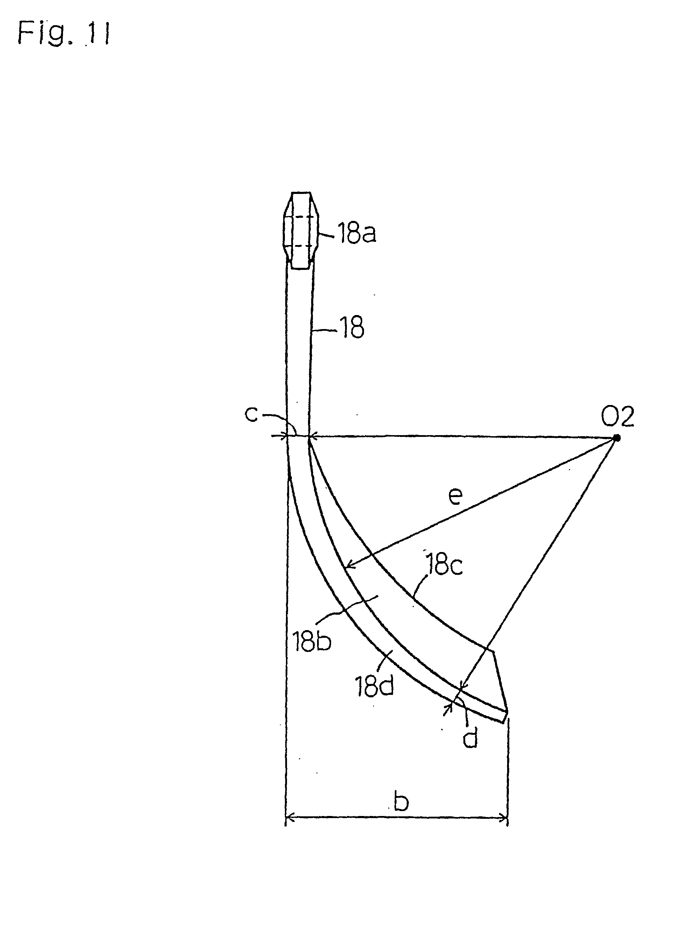

Next, explanation will be given on construction of the hatched-like claw of halberd type for demonstrating its elasticity as shown in Figs. 10 and 11. As shown in Fig. 10, the cultivating claw is curved in a revers C-like shape when viewed from the side, a blade 18c is provided at the swollen portion of reverse-C-like curve, and rotates toward the blade 18c as the same as the conventional, but a portion 18a to be inserted into the claw seat insertion is shifted from the center 01 of the cultivating claw shaft 17 so as to form a quick mounting claw for simple insertion, whereby a wedge portion of the insertion portion 18a is fixedly bitten by the holder 48a or 48b.

In the state where the cultivating claws 18 are mounted onto the cultivating claw shaft 17, a radius of rotation of the cultivating claw 18 rotating together with the cultivating claw shaft 17 is represented by a (in this embodiment, a=about 245mm), the cultivating claw 18, as shown in Fig. 11, gradually curves toward the utmost end when viewed in plan, and a radius e of curvature from the center 02 of curvature is about 120mm, a ratio of radius e of curvature to the radius a of rotation is made about 1:2, and a curvature 18b having a soil dipping-up surface is formed between the blade 18c and the back 18d, thereby demonstrating the elasticity.

Furthermore, the cultivating claw 18 is gradually reduced in thickness toward the utmost end, so that the reduced thickness can positively demonstrate the elasticity. In this embodiment, while the radius e of curvature is about 5mm at the initial portion of the base, the utmost end is reduced in thickness to about 3mm, and the ratio of the base thickness c to the utmost-end thickness d is about 5 to 3.

A ratio of width b of sidewise curvature from the end of the claw seat insertion 18a toward the utmost end of sidewise projection to the radius a of rotation is about 1:3, so that the width b is made larger than the claw of width of sidewise curvature for demonstrating plasticity as the conventional, thereby further demonstrating the elasticity.

In other words, the cultivating claw 18 is largely sidewise curved toward the utmost end side from the intermediate portion to be formed to dip up the soil after cutting away so as to form an elastic claw easily deformable and having the curvature 18b of large width b of curvature (b ≒ 80mm). Hence, when the cultivating claws 18 are driven into the soil, a force to push the soil laterally of the curvature by the horizontal component of force and a lateral repulsion power caused when the cultivating claw 18 is elastically deformed in the direction of reverse curvature by a resistance load of soil, put the dipped-up soil into the state that it is pushed substantially in parallel to the cultivating claw shaft 17 and laterally of the cultivator, whereby part of soil remaining as residual virgin soil between the loci of the utmost ends of the opposite left and right cultivating claws 18 is crushed, thereby effectively preventing the residual virgin soil from being produced.

In this case, when the cultivating claws 18 rotatably move to the vicinity of the point of finishing the cutting work so as to reduce a resistance load of soil, the restoring elasticity caused by elastic deformation when the cultivating claws 18 are driven in, laterally crushes the residual virgin soil, thereby further improving the crushing effect and giving the cutting soil itself a distortional force caused by the restring elasticity so as to crush clods into soft fine soil.

Thus, the number of cultivating claws 18 of the rotary cultivator 8 is, for example, about 70% of the conventional device, thereby enabling the high speed cultivating to be performed by the running speed twice larger than the conventional.

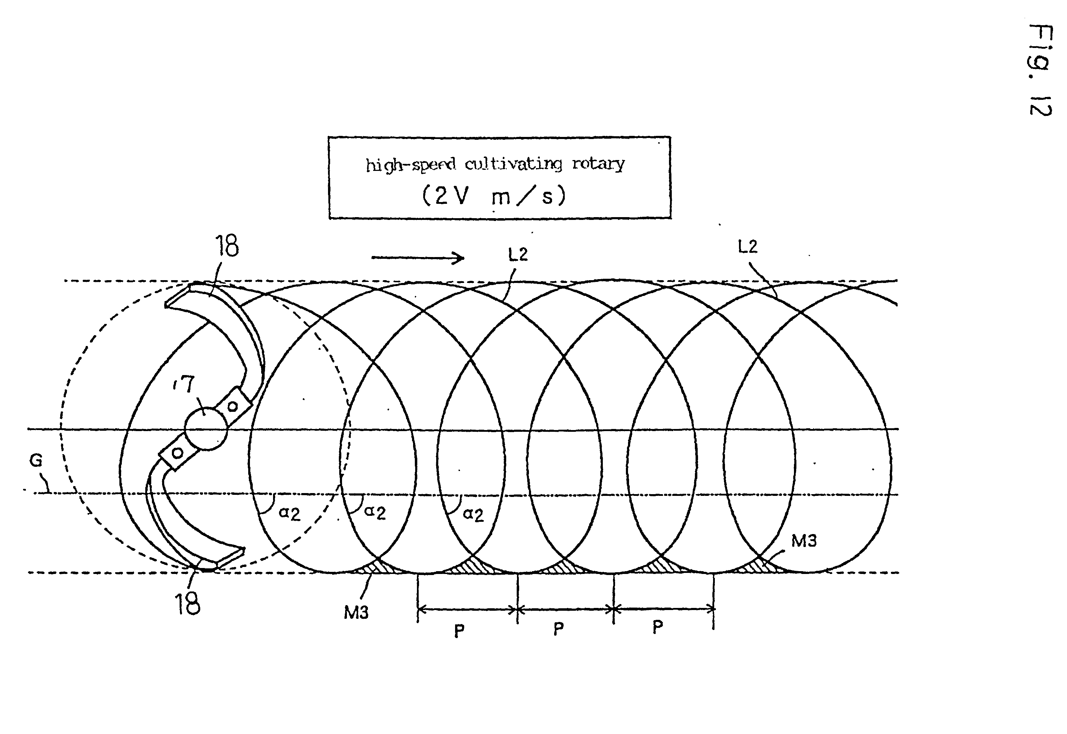

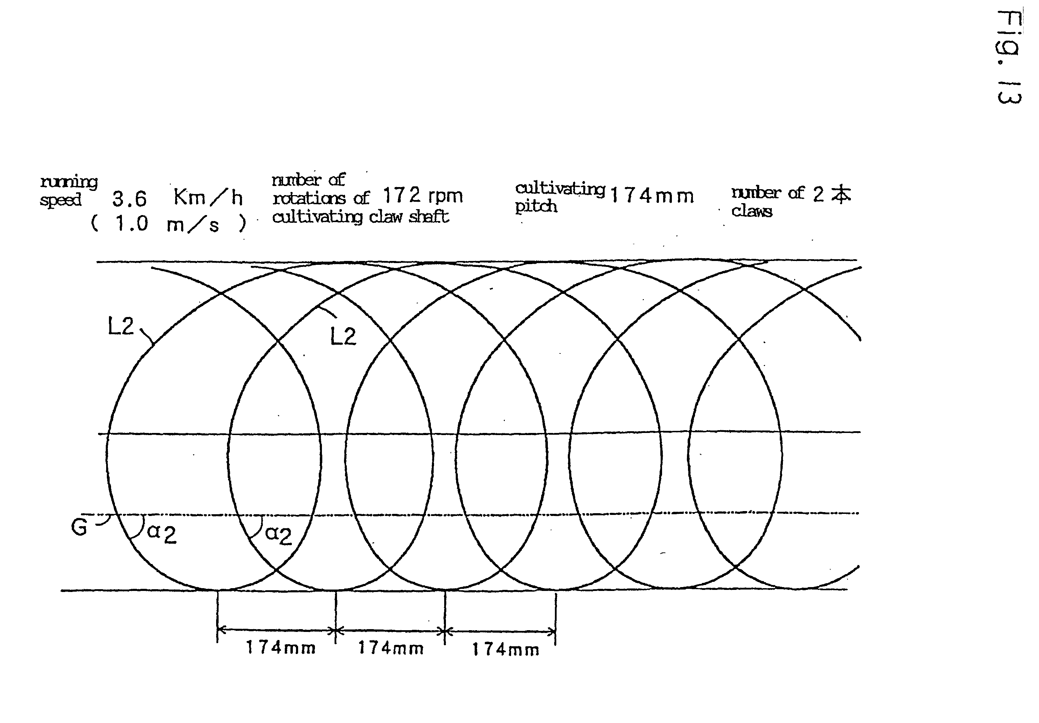

As shown in Figs. 12 and 13, the running speed of tractor 1 is twice larger than the standard speed V during the normal cultivating work.

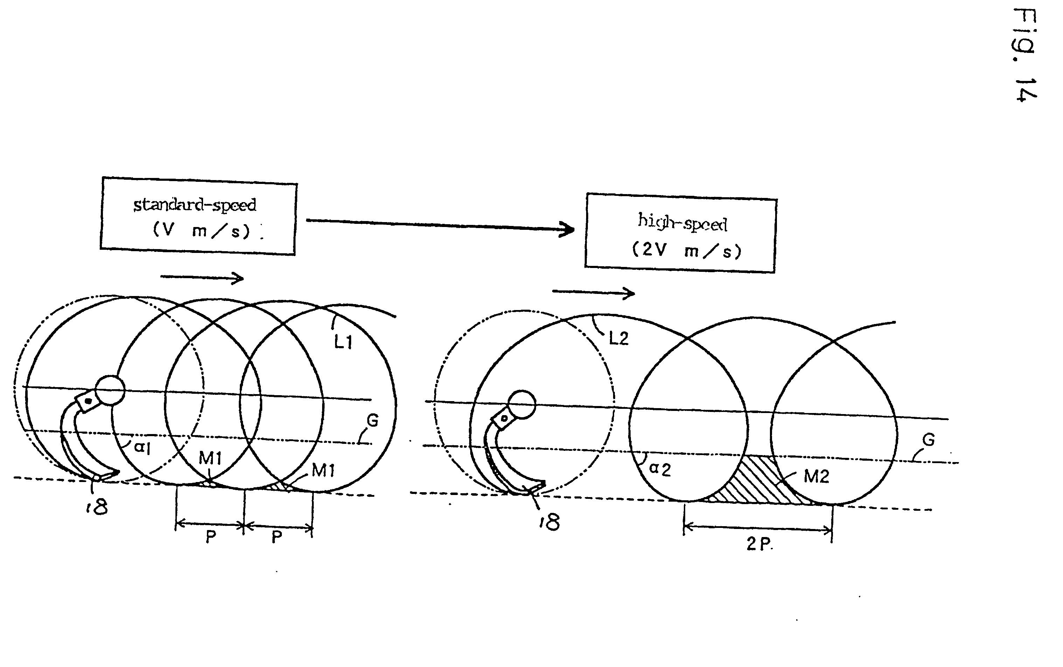

Conventionally, as shown in Fig. 14, when one cultivating claw cultivates soil on the same cultivating line at the farm and the tractor is driven at the standard speed V and the cultivating work is performed by the utmost-end locus L1 as shown in Fig. 14, the virgin soil portion M1 shown by hatching remains. When the cultivating work is performed as the utmost-end locus L2, in the same rotation number, and at the twice larger running speed using the conventional technique, the utmost-end locus L2 does not longitudinally overlap and cultivating pitch 2P twice larger than the standard cultivating pitch P so that the residual virgin soil M2 largely shown by hatching remains.

Therefore, the present invention, in order to diminish to a minimum the residual virgin soil M2 at the twice larger driving speed, two claws are provided and spaced at an interval of an angle of 180°, and two cultivating claws 18 as shown in Fig. 12 are used, and two utmost-end loci L2, which are shifted in phase by 180° per one rotation of the cultivating claw shaft 17, are used to perform cultivating work, the cultivating pitch P is made the same as that at the standard speed V, and the hatched virgin soil M3 is reduced to a minimum. When in the same number of rotations of cultivating claw and at the speed 2V twice larger than the standard speed V, the cultivating work to keep equal cultivating pitch is performable, thereby expecting reduction in labor time and a low manufacturing cost without increasing the required power.

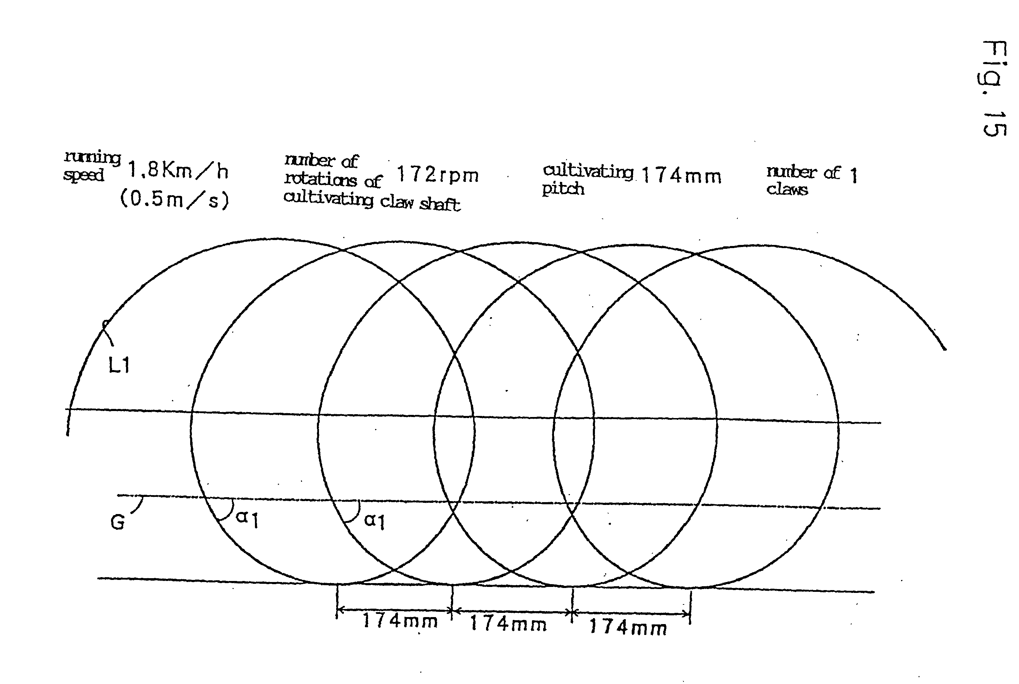

Fig. 15 shows the conventional work, in which , when the cultivating work is executed at the standard running speed V of 1.8 Km/h (0.5m/s), one claw, a radius of rotation of claw:120mm, and the number of rotations of cultivating claw shaft:172rpm, the utmost-end locus L1 when the cultivating pitch P is 174mm.

Fig. 13 shows the utmost-end locus L2 in the cultivating pitch P of 174 mm as the same as the above-mentioned when the cultivating work is performed at the twice larger running speed 2V of 3.6 km/h (1.0m/s), the two cultivating claws and the number of rotations of 172 rpm, so that even when the running speed twice increases, roughness of the residual virgin soil is restricted as the same as the cultivating work at the standard speed V.

In brief, even when the running speed is high, the utmost-end loci L1 and L2 are always overlapped to a maximum so as to enable the cultivating work of minimum residual virgin soil M1, M2 and M3. Other than the embodiment, the cultivating work of the same number of rotations of the cultivating claw shaft, at the speed 3V three times larger than the standard speed v, and of three cultivating claws used, can obtain the same result as this embodiment.

In the case where the running speed in the same number of rotations of the cultivating claw shaft is made two times or three times larger than the standard speed, an escape angle a crossing angle α2 between the ground surface G and the locus L2, when the cultivating claw 18 is to escape from the ground surface G, becomes larger than a crossing angle α1 at the standard speed V ( α2 > α1), so that, when the cultivating claw 18 escapes from the ground surface G, a raising force for soil increases so as to further promote the cutting, turnover and crushing of soil, thereby enabling the cultivating efficiency to be improved.

In addition, a cultivating work is the most preferable which is performed in condition of two cultivating claws 18, the tractor speed of 1 to 1.5 m/s, a radius a of rotation of cultivating claws 18 of about 240 to 250mm, the number of rotations of the cultivating claw shaft of about 150 to 470 rpm, and a cultivating pitch P of about 240 to 300 mm.

As seen from the above, the present invention is so constructed that a plurality of cultivating claws 18 for cultivating the soil on the same cultivating line are provided on the cultivating claw shaft, and the utmost-end loci L2 of claws 18 are overlapped longitudinally of the device and below the ground surface G, whereby even when the running speed of tractor is made higher than the normal speed, a proper cultivating work, which restricts to a minimum creation of the residual virgin soil without increasing the required power, can be performed to thereby expect a reduced labor time and a low manufacturing cost.

In other words, since the four or six cultivating claws 18 are disposed in the same plane perpendicular to the cultivating claw shaft 17, the cultivating pitch P is not rough even when the return speed increases. Since the plurality of cultivating claws 18 in the same plane are alternately larger or smaller in a difference of mounting angle, and they are alternate in the directions of curvature, the cut-in force in the forward direction of the cultivating claw 18 smaller in the difference of mounting angle is reduced to enable a horsepower loss to be reduced. Also, since there is a phase difference between the adjacent rows of cultivating claws 18, the claws do not simultaneously cut in the farm and the cutting force is dispersed not to be largely loaded.

The cultivating claws 18 are curved sidewise to be formed into elastic claws and the gap t is formed between the utmost-end loci of the adjacent cultivating claws 18, and for the six claws, three ones are mounted to the cultivating claw shaft 17 at intervals of 120 ° respectively. For the four claws, two ones are mounted to the shaft 17 at intervals of 180 ° respectively. Hence, while cultivating the farm by enlarging the gap t between the left and right cultivating claws 18 in condition of leaving the residual virgin soil, the cultivating work of the minimum residual virgin soil can be performed, whereby the cultivating work at high speed can be performed by the number of cultivating claws 18 required to a minimum and by smaller required power.

Also, the gap t is formed between the left and right curved cultivating claws 18 and the cutting blades 24 passing through each gap t are disposed, whereby the cutting blades 24 can crush clods at the gap t and the residual virgin soil in fact is not created although substantially the gap exists.

The cultivating claws 18 are made deflective by use of elastic material, so that the restoring force of the cultivating claw 18 once deflected can crush the residual virgin soil produced in the gap t between the utmost ends, whereby a small number of cultivating claws can cultivate the farm of large width of cultivating.

The total widths S1 and S2 of cultivating operation of cultivating claws in row are 70 to 90% of the cultivating operation width of the rotary cultivator, whereby the cultivating is performable by leaving the least width of virgin soil, thereby enabling the cultivating work with a smaller cultivating load and of the maximum cultivating width.

Since a phase difference is provided between the adjacent rows of cultivating claws 18, the timing of striking the cultivating claws soil is delayed and the cultivating claws can be disposed to repeat the strike-in under the minimum load, thereby enabling the load to be reduced and the rotation balance of cultivating claw 18 to be improved.

Furthermore, a crossing angle between the locus L2 of the utmost end of cultivating claw 18 when escaping from underground and the ground surface G, can be secured more than the predetermined value, so that, when the cultivating claws 18 escape from underground, the elastic force of the cultivating claw 18 can promote rising of soil, whereby a remarkable effect can be obtained which increases the crushing force of soil and restricts to a minimum the creation of residual virgin soil to thereby improve the cultivating efficiency.

Although, in this embodiment, the rotary cultivator provided at the rear of tractor is described, but can be utilized as the rotary cultivator provided at the rear of a walking type cultivator.

## Claims

1. A rotary cultivator comprising:
a horizontal shaft (17);
plural pairs of axially curved cultivating claws (18) mounted to said horizontal shaft (17) such that their holders (48a,48b) are located in axially spaced parallel planes which are perpendicular to said horizontal shaft (17), wherein the claws (18) of each said pair are arranged such that their axial curvature is directed in the same axial direction and that there is a 180° radial rotational angle difference between the holders (48a,48b) of the claws (18) of each pair,
wherein at each of said planes other than at those located at the outermost axial ends of the shaft (17) respectively first and second of said pairs of claws (18) are arranged such that the axial curvature of the first of said pair of claws (18) is directed in the opposite axial direction than that of the second of said pair of claws (18),
**characterized in that** there is a radial phase difference between the holders (48a,48b) of the first and second of said pairs of claws (18) at the same plane other than 90°, and
that a radial phase of the holders (48a,48b) of the first and second pairs of claws (18) at each plane is different from that at an adjoining plane.

2. The rotary cultivator according to claim 1, wherein each of said claws (18) is elastic and curved endward.

3. The rotary cultivator according to claim 2, wherein there is an axial gap along said shaft (17) between tips of each claw of said first pair of claws (18) at any one of said planes and each claw of said second pair of claws (18) at an adjoining one of said planes axially curved toward each other such that 70-90 percent of the whole range of ground along said shaft (17) onto which a cultivation effort is exerted by said rotary cultivator is brought into direct contact with all of said cultivating claws (18).

4. The rotary cultivator according to any of claims 1 to 3, wherein a vertically extended cutting blade (24) for cutting clods is fixed onto said rotary cultivator between said first pair of claws (18) and said second pair of claws (18) axially curved toward each other at any adjoining pair of said planes.

5. The rotary cultivator according to claim 4, wherein, when viewed along an axis of said shaft (17), a portion of said cutting blade (24) in vicinity of a ground surface is located within a rotational locus of said cultivating claws (18).

6. The rotary cultivator according to claim 4 or 5, wherein, when viewed along an axis of said shaft (17), a lower end of said cutting blade (24) is disposed above a lower end of a rotational locus of said cultivating claws (18).

## Patentansprüche

1. Kreiselkultivator mit:
einer horizontalen Welle (17),
mehreren Paaren axial gekrümmter Kultivationszinken (18), die an der horizontalen Welle (17) derart angebracht sind, daß ihre Halter (48a,48b) in axial beabstandeten parallelen Ebenen gelegen sind, die senkrecht zu der horizontalen Welle (17) sind, wobei die Zinken (18) jedes der Paare so angeordnet sind, daß ihre axiale Krümmung in der gleichen axialen Richtung gerichtet ist und daß eine radiale Drehwinkeldifferenz von 180° zwischen den Haltern (48a,48b) der Zinken (18) jedes Paars besteht,
wobei an jeder der Ebenen außer an den an den äußersten axialen Enden der Welle (17) gelegenen jeweils erste und zweite der Paare von Zinken (18) derart angeordnet sind, daß die axiale Krümmung des ersten Paars von Zinken (18) in der entgegengesetzten Axialrichtung zu der des zweiten Paars von Zinken (18) ausgerichtet ist,
**dadurch gekennzeichnet, daß** eine radiale Phasendifferenz zwischen den Haltern (48a,48b) der ersten und zweiten der Paare von Zinken (18) an der gleichen Ebene, die nicht 90° beträgt, besteht, und
daß eine radiale Phase der Halter (48a,48b) der ersten und zweiten Paare von Zinken (18) an jeder Ebene sich von der an einer anschließenden Ebene unterscheidet.

2. Kreiselkultivator nach Anspruch 1, wobei jeder der Zinken (18) elastisch und zum Ende hin gekrümmt ist.

3. Kreiselkultivator nach Anspruch 2, wobei ein axialer Zwischenraum längs der Welle (17) zwischen Spitzen jedes Zinkens des ersten Paars von Zinken (18) an irgend einer der Ebenen und jedem Zinken des zweiten Paars von Zinken (18) an einer anschließenden Ebene, die axial zueinander gekrümmt sind, besteht, so daß 70 bis 90% des gesamten Bodenbereichs entlang der Welle (17), auf den eine Kultivationswirkung durch den Kreiselkultivator ausgeübt wird, in direkten Kontakt mit allen Kultivatorzinken (18) gebracht wird.

4. Kreiselkultivator nach einem der Ansprüche 1 bis 3, wobei eine sich vertikal erstreckende Schneidklinge (24) zum Schneiden von Schollen an dem Kreiselkultivator zwischen dem ersten Paar von Zinken (18) und dem zweiten Paar von Zinken (18), die axial zueinander gekrümmt sind, an jedem benachbarten Paar der Ebenen befestigt ist.

5. Kreiselkultivator nach Anspruch 4, wobei, entlang einer Achse der Welle (17) betrachtet, ein Abschnitt der Schneidklinge (24) in Nachbarschaft einer Bodenoberfläche innerhalb eines Rotationsortes der Kultivationszinken (18) gelegen ist.

6. Kreiselkultivator nach Anspruch 4 oder 5, wobei, entlang einer Achse der Welle (17) betrachtet, ein unteres Ende der Schneidklinge (24) oberhalb einem unteren Ende eines Rotationsortes der Kultivationszinken (18) angeordnet ist.

## Revendications

1. Cultivateur rotatif comprenant :
un arbre horizontal (17) ;
plusieurs paires de dents cultivatrices courbes axialement (18) montées sur ledit arbre horizontal (17) de sorte que leurs supports (48a, 48b) soient situés dans des plans parallèles espacés axialement qui sont perpendiculaires au dit arbre horizontal (17), dans lequel les dents (18) de chaque paire sont agencées de sorte que leur courbure axiale soit dirigée dans la même direction axiale et qu'il existe une différence angulaire en rotation radiale de 180° entre les supports (48a, 48b) des dents (18) de chaque paire,
dans lequel à chacun desdits plans autres que ceux situés aux extrémités axiales les plus à l'extérieur de l'arbre (17) respectivement une première et une seconde desdites paires de dents (18) sont agencées de sorte que la courbure axiale de la première desdites paires de dents (18) soit dirigée dans la direction axiale opposée à celle de la seconde desdites paires de dents (18),
**caractérisé en ce qu'**il existe une différence de phase radiale entre les supports (48a, 48b) de la première et de la seconde desdites paires de dents (18) au même plan autre que 90°, et
qu'une phase radiale des supports (48a, 48b) de la première et de la seconde paires de dents (18) à chaque plan est différente de celle à un plan attenant.

2. Cultivateur rotatif selon la revendication 1, dans lequel chacune desdites dents (18) est élastique et courbe à l'extrémité.

3. Cultivateur rotatif selon la revendication 2, dans lequel il existe un écart axial le long dudit arbre (17) entre des bouts de chaque dent de ladite première paire de dents (18) à l'un quelconque desdits plans et de chaque dent de ladite seconde paire de dents (18) à un plan attenant desdits plans, qui sont courbées axialement l'une vers l'autre, de sorte que 70-90 pour cent de toute la plage de terroir le long dudit arbre (17) sur lequel un effort de culture est exercé par ledit cultivateur rotatif sont amenés en contact direct avec l'ensemble desdites dents cultivatrices (18).

4. Cultivateur rotatif selon l'une quelconque des revendications 1 à 3, dans lequel une lame coupante verticale (24) destinée à couper des mottes de terre est fixée sur ledit cultivateur rotatif entre ladite première paire de dents (18) et ladite seconde paire de dents (18) courbes axialement l'une vers l'autre à l'une quelconque des paires desdits plans attenants.

5. Cultivateur rotatif selon la revendication 4, dans lequel, lorsqu'elle est vue le long d'un axe dudit arbre (17), une portion de ladite lame coupante (24) au voisinage d'une surface de la terre est située dans un lieu de rotation desdites dents cultivatrices (18).

6. Cultivateur rotatif selon l'une quelconque des revendications 4 ou 5, dans lequel, lorsqu'elle est vue le long d'un axe dudit arbre (17), une extrémité inférieure de ladite lame coupante (24) est placée au-dessus d'une extrémité inférieure d'un lieu de rotation desdites dents cultivatrices (18).
